# EUROPÄISCHE PATENTANMELDUNG

(11) **EP 1 739 286 A1**
(43) Veröffentlichungstag der Anmeldung: **03.01.2007**
(21) Anmeldenummer: 06013499.6
(22) Anmeldetag: 29.06.2006
(51) Int. Cl.: F01L 3/10

(54) **Ventilfederteller mit zwei Abstützzungen**

(30) Priorität: 30.06.2005 DE 102005031089
(71) Anmelder: Muhr und Bender KG, 57439 Attendorn (DE)
(72) Erfinder: Muhr, Thomas, 57439 Attendorn (DE); Asbeck, Jochen, 57439 Attendorn (DE); Kobelev, Vladimir, 57439 Attendorn (DE); Westerhoff, Karsten, 58300 Wetter (DE); Brecht, Dieter, 57462 Olpe (DE); Hees, Andreas, 57629 Norken (DE)
(74) Vertreter: Neumann, Ernst Dieter

(57) **Zusammenfassung**

Federteller 11 für eine Ventilfeder einer Brennkraftmaschine, der unmittelbar mit dem Ventilschaft 31 eines Gaswechselventils unter Eingriff in eine Ringnut 33 im Ventilschaft 31 verbindbar ist, mit einer Ringscheibe 12 zur Auflage auf der Ventilfeder und zwei von dieser Ringscheibe 12 aus nach radial innen gerichteten Abstützzungen 13, deren innere Enden 14 in Aufsicht auf den Federteller 11 Ausnehmungen 15 zum Eingriff in die Ringnut 33 haben.

## Beschreibung

Die Erfindung betrifft einen Federteller für eine Ventilfeder einer Brennkraftmaschine, der unmittelbar mit dem Ventilschaft eines Gaswechselventils unter Eingriff in eine Ringnut im Ventilschaft verbindbar ist. Federteller dieser Art halten und zentrieren die Ventilfedern von Gaswechselventilen, die konzentrisch zum Ventilschaft angeordnet sind und sich insbesondere über einen zweiten Federteller am Zylinderkopf abstützen. Hierbei erfolgt die Ventilbetätigung über die Ausübung von Druckkräften auf das über den Federteller überstehende freie Ende des Ventilschafts durch Nocken, Kipphebel oder Schlepphebel, wobei zwischen diesen Betätigungselementen und dem Federteller Spielausgleichsvorrichtungen eingesetzt sein können.

Federteller der obenbezeichneten Art sind beispielsweise aus den Patenten US 3 612 016, US 5 343 835 und US 5 381 765 bekannt.

Aufgabe der vorliegenden Erfindung ist es, einen gegenüber diesen bekannten Vorrichtungen verbesserten kurzen und steifen Federteller sowie eine Anordnung aus einem solchen Federteller und einem Gaswechselventil bereitzustellen.

Die Aufgabe besteht weiterhin darin, eine Vorrichtung zur Montage einer derartigen Anordnung vorzuschlagen.

Die Lösung besteht in einem Federteller für eine Ventilfeder einer Brennkraftmaschine, der unmittelbar mit dem Ventilschaft eines Gaswechselventils unter Eingriff in eine Ringnut im Ventilschaft verbindbar ist, mit einer Ringscheibe zur Auflage auf der Ventilfeder und zwei von dieser Ringscheibe aus nach radial innen gerichteten Abstützzungen, deren innere Enden in Aufsicht auf den Federteller Ausnehmungen zum Eingriff in die Ringnut haben, sowie in einer entsprechenden Anordnung aus einem Gaswechselventil einer Brennkraftmaschine mit einem Ventilschaft mit einer Ringnut und einem Federteller für eine Ventilfeder, der unmittelbar mit dem Ventilschaft unter Eingriff in die Ringnut verbunden ist, wobei der Federteller mit einer Ringscheibe zur Auflage auf der Ventilfeder und zwei von dieser Ringscheibe aus nach radial innen gerichteten Abstützzungen, deren innere Enden in Aufsicht auf die Ringscheibe Ausnehmungen zum Eingriff in die Ringnut haben, versehen ist. Die Beschränkung auf zwei Abstützzungen läßt eine wesentlich steifere Ausführung des Federtellers ohne eine wesentliche Vergrößerung der Masse zu. Die Herstellung des Federtellers und seine Montierbarkeit mit dem Gaswechselventil werden darüberhinaus wesentlich vereinfacht.

In einer ersten bevorzugten Ausführungsform ist vorgesehen, daß die Abstützzungen so gestaltet sind, daß bei axialer Abstützung der Ringscheibe von der Ventilfederseite her und axialer Belastung der Abstützzungen in Richtung zur Ventilfederseite hin der Abstand zwischen den inneren Enden der sich gegenüberliegenden Abstützzungen vermindert wird. Hierfür wird insbesondere vorgeschlagen, daß bei entspanntem Federteller zwischen den inneren Enden der Abstützzungen in Aufsicht auf den Federteller ein Abstand vorgesehen ist. Hieraus resultiert eine Anordnung, die sich dadurch auszeichnet, daß die Abstützzungen so gestaltet sind, daß bei axialer Abstüzung der Ringscheibe durch die Ventilfeder und bei axialer Belastung der Abstützzungen durch eine Ringflanke in der Ringnut in Richtung zur Ventilfederseite hin der Abstand zwischen den inneren Enden der sich radial gegenüberliegenden Abstützzungen vermindert wird. Bei Belastung der Anordnung im Betrieb wird somit bei zunehmender Federkraft durch Niederdrücken des Ventilschafts die radial gerichtete Abstützkraft des Federtellers am Ventilschaft innerhalb der Ringnut vergrößert, so daß eine steife Verbindung entsteht und ein Umschlagen der Abstützzungen ausgeschlossen ist.

In einer zweiten bevorzugten Ausführungsform ist vorgesehen, daß die Abstützzungen so gestaltet sind, daß bei axialer Abstützung der Ringscheibe von der Ventilfederseite her und axialer Belastung der Abstützzungen in Richtung zur Ventilfederseite hin der Abstand zwischen den inneren Enden der sich gegenüberliegenden Abstützzungen unverändert bleibt. Hierbei wird insbesondere vorgeschlagen, daß bei demontiertem Federteller die inneren Enden der Abstützzungen spannungsfrei oder unter Vorspannung sich berührend aneinanderliegen. Hieraus resultiert eine Anordnung, die sich dadurch auszeichnet, daß die Abstützzungen so gestaltet sind, daß bei axialer Abstützung der Ringscheibe durch die Ventilfeder und axialer Belastung der Abstützzungen durch eine Ringflanke in der Ringnut zur Ventilfederseite hin der Abstand zwischen den inneren Enden der sich gegenüberliegenden Abstützzungen unverändert bleibt. Bei Belastung der Anordnung im Betrieb wird somit bei zunehmender Federkraft durch Niederdrücken des Ventilschafts die radiale Abstützkraft der inneren Enden der Abstützzungen aneinander vergrößert, so daß eine Aussteifung des Federtellers entsteht, wobei ein Umschlagen der Abstützzungen ausgeschlossen ist. Aufgrund eines radialen Spiels der von den Ausnehmungen gebildeten Aufnahmeöffnung gegenüber der Ringnut bleibt hierbei in vorteilhafter Weise der Federteller gegenüber dem Ventilschaft frei drehbar.

Weiter wird in bevorzugter Ausführungsform vorgeschlagen, daß die inneren Ringkanten der Abstützzungen gegenüber einer Auflagelinie für die Ventilfeder an der Ringscheibe axial in Richtung zum Ende des Ventilschafts beabstandet sind. Weiterhin ist vorgesehen, daß Geraden durch die inneren Ringkanten der Abstützzungen und die Auflagelinie für die Ventilfeder an der Ringscheibe einen stumpfen Winkel einschließen, der sich in Richtung zur Ventilfeder öffnet.

Konstruktiv bevorzugte Ausführungsformen gehen dahin, daß im Axialschnitt durch den Federteller mittig durch die Abstützzungen jeweils eine Ringscheibenhälfte mit jeweils einer Abstützzunge S-förmig oder Z-förmig verläuft. Nach einer bevorzugten Form des Federtellers ist vorgesehen, daß in Aufsicht auf den Federteller zwischen den Abstützzungen und der Ringscheibe zwei sich gegenüberliegende sichelförmige Ausbrechungen seitlich zu den Abstützzungen gebildet werden.

In einer weiteren Ausführungsform kann vorgesehen sein, daß die Ausnehmungen an den inneren Enden der Abstützzungen sich in Aufsicht auf den Federteller zum Kreis ergänzen. Alternativ hierzu ist es möglich, daß die Ausnehmungen an den inneren Enden der Abstützzungen sich in Aufsicht auf den Federteller zu einem Oval inneren Enden der Abstützzungen sich in Aufsicht auf den Federteller zu einem Oval ergänzen, dessen kürzeres Innenmaß in Richtung der Abstützzungen verläuft. Während bei der ersten Alternative eine im wesentlichen gleichmäßige Kantenbelastung in vorteilhafter Weise erreicht wird, ist bei der zweiten Alternative ein leichtes Kippen des Federtellers zum Selbstausrichten auf dem Ventilschaft in Anpassung an die Ventilfeder möglich.

Die Lösung besteht weiterhin in einer Vorrichtung zur Montage einer vorgenannten Anordnung aus Federteller und Gaswechselventil mit Abstützmitteln, auf die sich der Federteller mit der Oberseite der Ringscheibe auflegen kann, mit innerhalb der Abstützmittel liegenden Zugmitteln, die gegenüber den Abstützmitteln axial verstellbar sind und mit einem Paar Zugklauen, die von den Zugmitteln betätigbar sind und relativ zu den Abstützmitteln und den Zugmitteln radial beweglich sind, wobei die Zugklauen in einer radial nach außen geschwenkten Stellung durch die sichelförmigen Ausbrechungen des Federtellers hindurchführbar sind und in einer radial nach innen geschwenkten Stellung die Abstützzungen von der Ventilfederseite hintergreifen.

Ein erstes Ausführungsbeispiel betrifft eine Montagevorrichtung mit einer außenliegenden Stützhülse, an deren kreisringförmigem ersten Hülsenende sich der Federteller mit der Oberseite der Ringscheibe auflegen kann, einer innenliegenden Zughülse, die in die Stützhülse einziehbar ist und zwei radial ausbiegbare Zugklauen umfaßt, die in aus der Stützhülse ausgefahrener Stellung radial ausbiegen und durch die sichelförmigen Ausbrechungen des Federtellers hindurchführbar sind und sich beim Zurückziehen der Zughülse in die Stützhülse nach innen einschwenkend auf die Unterseite der Abstützzungen auflegen und diese unter Erweiterung der Einstecköffnung ausbiegen, so daß der Ventilschaft von der Ventilfederseite in den Federteller einführbar ist.

Eine einfache Form der Betätigungsmittel kann hierbei darin liegen, daß die Zughülse ein Außengewinde hat, auf das eine Mutter aufgedreht ist, die sich an der Stützhülse axial entgegengesetzt zum kreisringförmigen ersten Hülsenende am zweiten Hülsenende abstützt.

Für eine Serienmontage wäre es vorzuziehen, daß die Zughülse gegenüber der Stützhülse abgestützte Axialverstellmittel aufweist, die insbesondere hydraulisch, pneumatisch, elektrisch oder elektromagnetisch verstellbar sind.

Ein zweites Ausführungsbeispiel betrifft eine Montagevorrichtung mit einem Gehäuse mit außenliegenden Stützzungen, auf deren Enden sich der Federteller mit der Oberseite der Ringscheibe auflegen kann, einem innenliegenden Zugbolzen, der zwischen die Stützzungen einziehbar ist und zwei radial ausschwenkbare Zugklauen trägt, die in aus den Stützzungen ausgefahrener Stellung radial ausschwenkbar sind und durch die sichelförmigen Ausbrechungen des Federtellers hindurchführbar sind, und die sich beim Zurückziehen des Zugbolzens zwischen die Stützzungen nach innen einschwenkend auf die Unterseite der Abstützzungen auflegen und diese unter Erweiterung der Einstecköffnung ausbiegen, so daß der Ventilschaft von der Ventilfederseite in den Federteller einführbar ist.

Hierbei ist insbesondere vorgesehen, daß die Zugklauen zwischen zwei Führungsbacken geführt sind, die über Kreuz mit den Stützzungen angeordnet sind.

Auch für diese Montagevorrichtung wird vorgeschlagen, daß der Zugbolzen gegenüber den Stützzungen mittelbar abgestützte Axialverstellmittel aufweist, die insbesondere hydraulisch, pneumatisch, elektrisch oder elektromagnetisch verstellbar sind.

Die bevorzugte Herstellung der erfindungsgemäßen Federteller besteht darin, daß zunächst aus einer Ringscheibe oder einer Ronde das Erzeugnis gezogen und gestanzt wird. Danach erfolgt eine Wärmebehandlung, ein anschließendes Kugelstrahlen und ein Schleifen zumindest der Stirnfläche zur Anlage in der Ringnut sowie der Innenkanten, die die Einstecköffnung bilden.

Bevorzugte Ausführungsbeispiele der Erfindung sowie erfindungsgemäße Vorrichtungen zu deren Montage sind in den Zeichnungen dargestellt und werden nachstehend beschrieben.
- Figur 1: zeigt einen erfindungsgemäßen Federteller in einer ersten Ausführung
a) in isometrischer 3D-Darstellung
b) in Draufsicht
c) im Schnitt entlang der Linie A-A nach Darstellung b)
d) im Schnitt gemäß der Schnittlinie B-B nach Darstellung b)
e) in einer vergrößerten Einzelheit der Darstellung c)
f) in einer vergrößerten Einzelheit der Darstellung d);
- Figur 2: zeigt einen Federteller nach Figur 1 a in vergrößerter bezifferter Darstellung;
- Figur 3: zeigt das Ende eines Ventilschafts eines Gaswechselventils zur Verbindung mit einem erfindungsgemäßen Federteller nach Figur 1;
- Figur 4: zeigt eine erfindungsgemäße Anordnung aus einem Federteller nach Figur 1 und dem Ventilschaft eines Gaswechselventils;
- Figur 5: zeigt eine erfindungsgemäße Vorrichtung zur Montage einer erfindungsgemäßen Anordnung in einer ersten Ausführung
a) in isometrischer 3D-Darstellung
b) in axialer Ansicht mit einem aufgelegten Federteller
c) im Längsschnitt nach der Schnittlinie A-A aus Darstellung b)
d) in axialer Ansicht auf das entgegengesetzte Ende der Vorrichtung;
- Figur 6: zeigt einen erfindungsgemäßen Federteller in einer zweiten Ausführung
a) in isometrischer 3D-Darstellung
b) in Draufsicht
c) im Schnitt entlang der Linie A-A nach Darstellung b)
d) im Schnitt gemäß der Schnittlinie B-B nach Darstellung b);
- Figur 7: zeigt einen Federteller nach Figur 6a in vergrößerter bezifferter Darstellung;
- Figur 8: zeigt das Ende eines Ventilschafts eines Gaswechselventils zur Verbindung mit einem erfindungsgemäßen Federteller nach Figur 6;
- Figur 9: zeigt eine erfindungsgemäße Anordnung aus einem Federteller nach Figur 6 und dem Ventilschaft eines Gaswechselventils;
- Figur 10: zeigt eine erfindungsgemäße Vorrichtung zur Montage einer erfindungs-gemäßen Anordnung in einer zweiten Ausführung mit einem eingesetzten Federteller in seitlicher Ansicht;
- Figur 11: zeigt die Vorrichtung nach Figur 10 in isometrischer 3D-Darstellung;
- Figur 12: zeigt Einzelheiten der Vorrichtung nach Figur 10 und 11 in 3D-Darstellung.

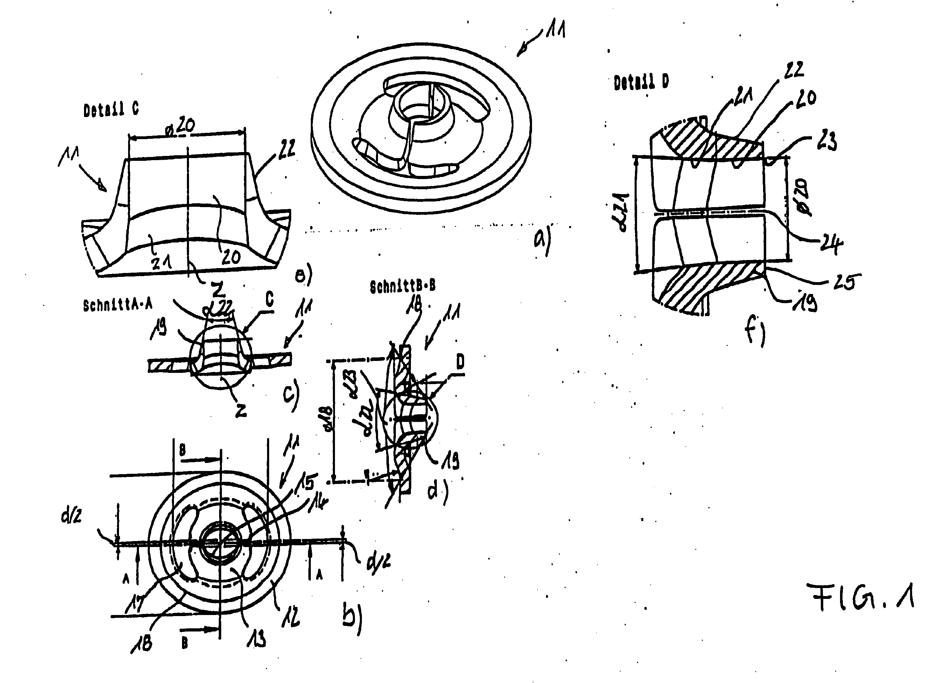

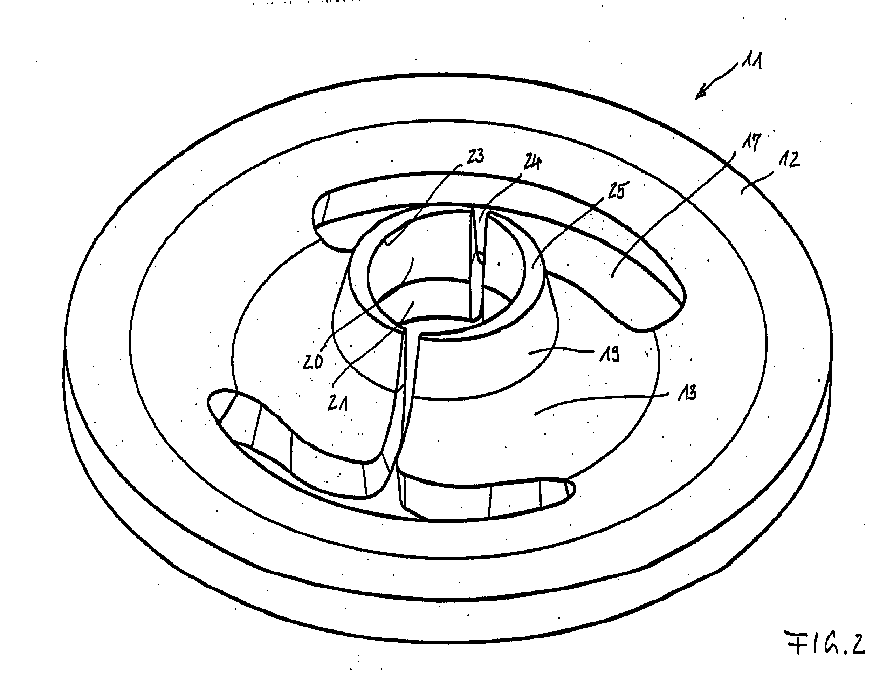

Die einzelnen Darstellungen der Figur 1 und die Figur 2 werden nachstehend gemeinsam beschrieben. An einem erfindungsgemäßen Federteller 11 sind eine äußere Ringscheibe 12 und zwei von dieser radial nach innen vorstehende Abstützzungen 13 zu erkennen. Die Zahl der Abstützzungen 13 ist hier in erfindungsgemäßer Weise auf zwei beschränkt. Der Federteller 11 insgesamt und insbesondere die Abstützzungen 13 sind symmetrisch zu einer Schnittebene A-A durch die Mittelachse Z des Federtellers 11. Die inneren Enden 14 der Abstützzungen 13 weisen in der hier dargestellten spannungsfreien Stellung des Federtellers 11 einen Abstand d voneinander in Richtung der Schnittebene B-B auf. Die vorderen Enden 14 der Abstützzungen 13 weisen etwa halbkreisförmige Ausnehmungen 15 auf, die gemeinsam eine Einstecköffnung 16 bilden. Mit den Ausnehmungen 15 können sich die Abstützzungen 13 in einer Ringnut eines Ventilschafts eines Gaswechselventils eines Verbrennungsmotors unter Eingriff in die Ringnut axial und radial abstützen. Die Form der Ausnehmungen 15 kann sich gemeinsam zu einem Kreis ergänzen oder ein Oval bilden, dessen größere Achse sich in Richtung der Schnittebene A-A erstreckt. Grundsätzlich kann die von den Ausnehmungen 15 gebildete Einstecköffnung 16 auch in Draufsicht als Vieleck ausgebildet sein, das die zuvor beschriebenen Kurven (Kreis oder Oval) einbeschreibt. Die Abstützzungen 13 sind so ausgestaltet, daß sich zwischen den Abstützzungen 13 und der Ringscheibe 12 zwei sich gegenüberliegende sichelförmige Ausbrechungen 17 bilden. Mit einer Kreislinie ist die Auflage- bzw. Abstützlinie 18 für eine Ventilfeder an der Ringscheibe 12 gekennzeichnet. Der Durchmesser ∅18 der Auflagelinie 18 entspricht damit dem mittleren Windungsdurchmesser einer zugeordneten schraubenförmigen Ventilfeder. Die bestimmungsgemäße Lage der Ventilfeder ist unterhalb des Federtellers in der Darstellung der Draufsicht nach Figur 1b anzunehmen. Sichtbar ist somit die Oberseite des Federtellers, der sich mit seiner Unterseite auf die Ventilfeder auflegt, die nicht dargestellt ist. Die Abstützzungen 13 sind im Bereich der inneren Enden 14 zu einer mittig geteilten Abstützhülse 19 verformt, die zwischen den Abstützzungen 13 zwei Schlitze 24 mit konstanter Breite (d) bildet. Das im wesentlichen konstante Wanddicke aufweisende Material des gesamten Federtellers 11 ist im Bereich der Abstützhülse 19 reduziert. Die Einstecköffnung 16 ist aus einem inneren Zylinderabschnitt 20 mit einem Durchmesser ∅20 und einem inneren Konusabschnitt 21 mit einem spitzen Öffnungswinkel α21 ausgebildet. Der Öffnungswinkel α21 kann bevorzugt in der Größenordnung von 5-10°, insbesondere bei 8,5° liegen. Die Wandstärke der Abstützhülse 19 ist insbesondere zum freien Ende der Abstützhülse 19 hin abnehmend, wobei eine äußere Konusfläche 22 einen größeren Öffnungswinkel a22 als der innere Konusabschnitt 21 bildet, wobei der Öffnungswinkel a22 bevorzugt in der Größenordnung von 20-30°, insbesondere bei 26° liegen kann. Im Schnitt B-B ist erkennbar, daß die Federtellerhälften im Schnitt durch die Abstützzungen 13 jeweils S-förmig geschwungen sind und annähernd tangential in die Abstützhülse 19 übergehen. Mit einer inneren Abstützkante 23 an einer Stirnfläche 25 am freien Ende der Abstützhülse 19, stützt sich der Federteller 11 in einer Ringnut am Ventilschaft bei Belastung durch die Ventilfeder ab. Geraden durch die Auflagelinie 18 auf der Federtellerunterseite und durch die Abstützkante 23, die ebenfalls eingezeichnet sind, spannen einen stumpfen Öffnungswinkel α23 auf, der sich zur Ventilfederseite öffnet. Dies bedeutet in anderer Umschreibung, daß ein axialer Abstand zwischen der Auflagelinie 18 auf der Federtellerunterseite und der Abstützkante 23, die einen kleineren Durchmesser als die Auflagelinie 18 hat, vorhanden ist. Hiermit wird bewirkt, daß bei Belastung des Federtellers 11 durch die Ventilfeder einerseits, die auf die Ringscheibe 12 einwirkt, und durch den Ventilschaft andererseits, der mittels einer Ringnut auf die Abstützzungen 13 einwirkt, eine infinitesimale Verformung der Abstützzungen 13 bewirkt wird, die tendenziell die Breite der Schlitze 24 verringert, so daß sich die Abstützhülse 19 mit erhöhter radialer Vorspannung im Nutgrund der erhöhter radialer Vorspannung im Nutgrund der Ringnut im Ventilschaft anlegt. Die effektiven Biegebewegungen der Abstützzungen 13 sind hierbei äußerst gering, da die Abstützzungen 13 nach der Montage bereits spielfrei, insbesondere mit radialer Vorspannung in der Ringnut des Ventilschafts einsitzen können.

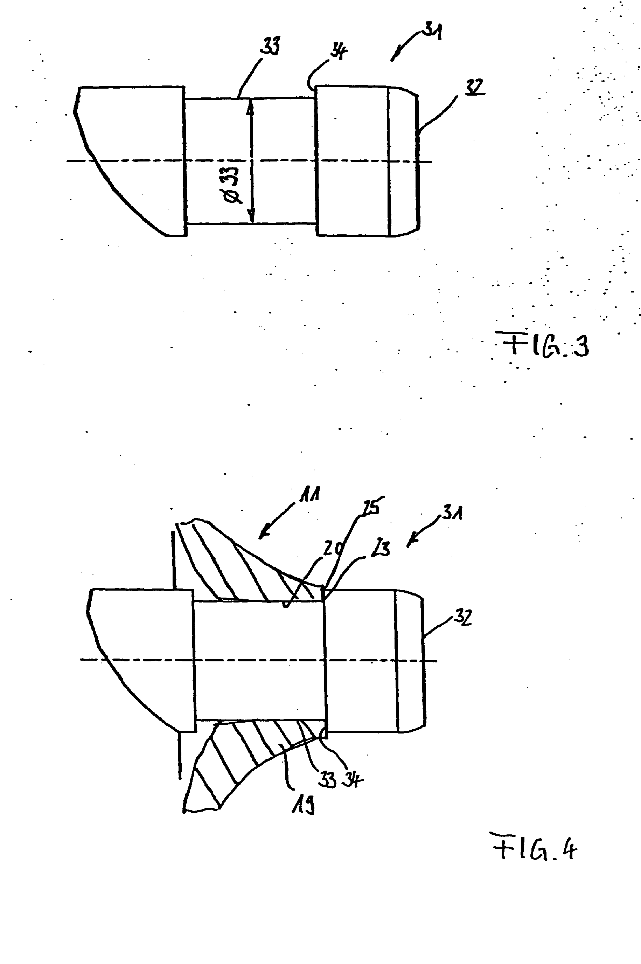

Die Figuren 3 und 4 werden nachstehend gemeinsam beschrieben. Es ist der abgebrochen dargestellte Ventilschaft 31 eines Gaswechselventils gezeigt, in dem mit geringem Abstand von einer Druckfläche 32 für einen Nocken oder dergleichen eine Ringnut 33 in Rechteckform ausgebildet ist, deren Nutgrund den Durchmesser 033 hat. Dieser Durchmesser 033 ist größer als der Durchmesser ∅20 des Zylinderabschnitts 20 der Abstützhülse 19 des Federtellers 11 im entspannten Zustand. In Figur 3 ist der Federteller 11 in der Ringnut 33 montiert, wobei er sich mit der Abstützkante 23 bzw. seiner Stirnfläche 25 an einer Ringflanke 34 der Ringnut 33 abstützt und mit dem Zylinderabschnitt 20 der Abstützhülse 19 unter Vorspannung am Grund der Ringnut 33 anliegt.

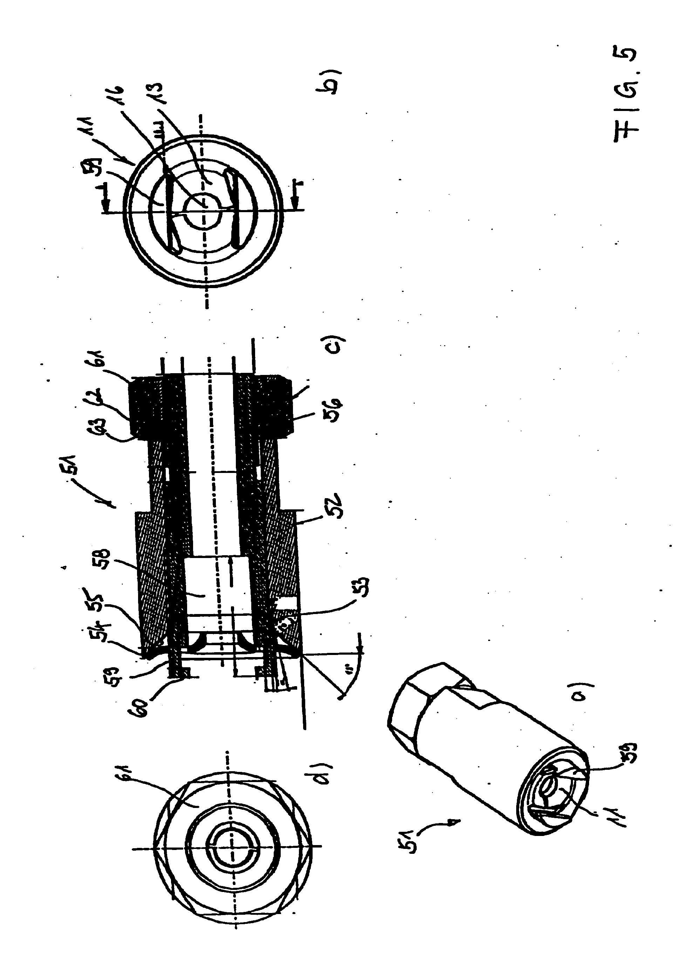

Die einzelnen Darstellungen der Figur 5 werden nachstehend gemeinsam beschrieben. Eine erfindungsgemäße Montagevorrichtung 51 umfaßt eine außenliegende Stützhülse 52 mit einem Innenkonus 53 an einem in Darstellung c) links liegenden ersten Hülsenende 54. In die Stützhülse 52 ist eine Zughülse 56 axial verschiebbar eingesetzt. An der Zughülse 56 ist ein Außenkonus 57 ausgebildet, der mit dem Innenkonus 53 bei Verschieben der Zughülse 56 innerhalb der Stützhülse 52 in Darstellung c) in Richtung nach rechts zusammenwirken kann. Das vordere Ende der Zughülse 56 hat eine mittige Trogausnehmung 58, die zur Ausformung zweier sich gegenüberliegender Klauen 59 mit nach innen weisenden Haken 60 dient. Die Zughülse 56 umfaßt weiterhin ein Außengewinde 61, auf das eine Mutter 62 aufgedreht ist, die sich am rechtsliegenden zweiten Hülsenende 63 der Stützhülse 52 abstützt. Im Längsschnitt der Darstellung c) ist die Zughülse 56 in einer nach links verschobenen Stellung gezeigt, in der die Klauen 59 entspannt und nach außen geschwenkt sind und die Klauen 59 mit den Haken 60 durch die Ausbrechungen 17 eines auf einen Innenkonus 55 am ersten Hülsenende 54 aufgelegten erfindungsgemäßen Federtellers 11 hindurchgeführt werden können. Wird ausgehend von dieser Position die Zughülse 56 durch Andrehen der Mutter 62 gegenüber der Stützhülse 52 nach rechts verschoben, so gleitet der Außenkonus 57 auf dem Innenkonus 53 auf, so daß sich die Klauen 59 elastisch vorgespannt nach innen einbiegen. Hierbei kommen die Haken 60 in radiale Überdeckung mit den seitlichen Rändern der Abstützzungen 13, so daß diese unter Erweiterung der Einstecköffnung 16 aufgebogen werden. Diese Verformung erfolgt so weit, daß der Ventilschaft eines Gaswechselventils mit seinem vollen Durchmesser durch die Einstecköffnung 16 hindurchgeschoben werden kann, bis die Ringnut im Ventilschaft die axiale Position der Abstützzungen 13 erreicht und es durch Losdrehen der Mutter 62 ermöglicht wird, daß die Abstützzungen 13 mit ihren inneren Enden 14 in die Ringnut am Ventilschaft eingreifen. In der entspannten Stellung der Klauen 59 kann dann die Montagevorrichtung 51 von der Anordnung aus Ventilschaft und Federteller wieder abgezogen werden. Anstelle der Gewinde-Mutter-Kombination zum Erzeugen der Zugkräfte auf die Zughülse können jegliche anderen Axialkrafterzeuger geeigneter Anpassung treten. Diese können hydraulisch oder pneumatisch betätigt sein oder auch elektromagnetisch oder elektromotorisch.

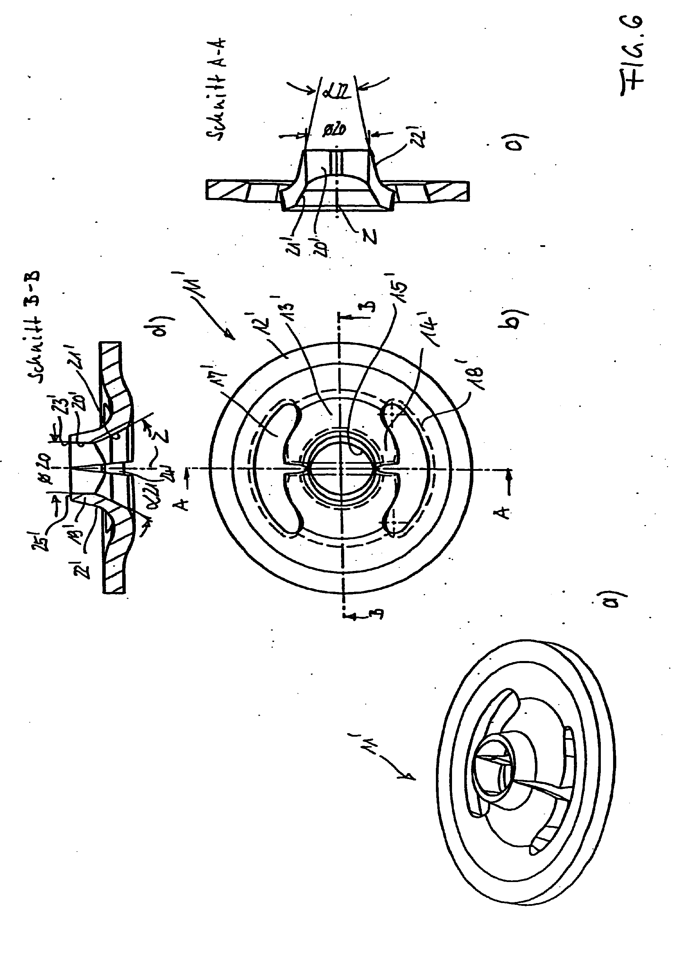

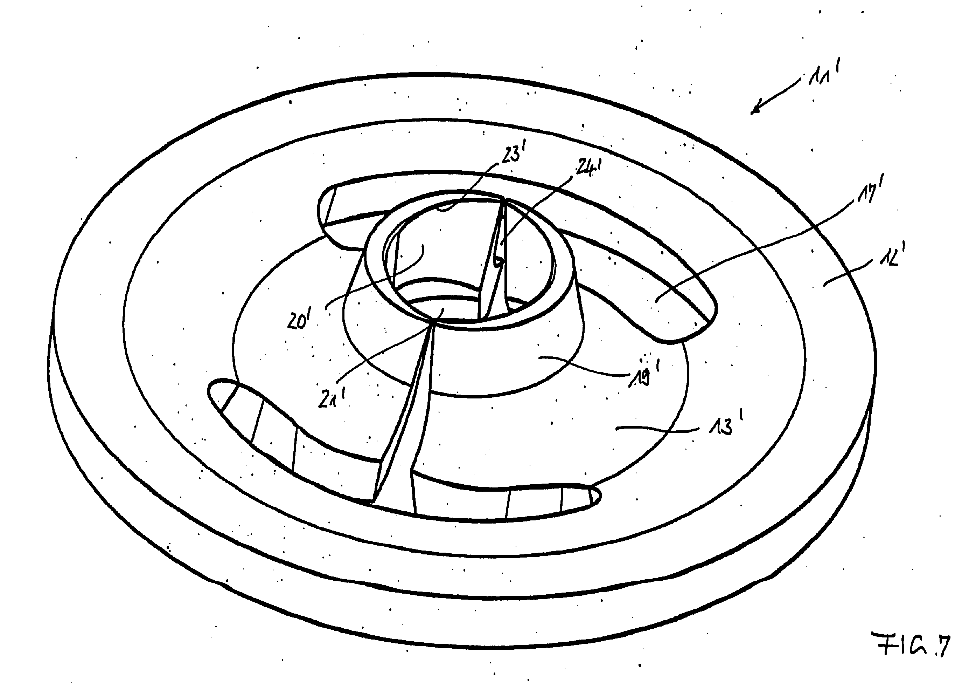

Die einzelnen Darstellungen der Figur 6 und die Figur 7 werden nachstehend gemeinsam beschrieben. An einem erfindungsgemäßen Federteller 11' sind eine äußere Ringscheibe 12' und zwei von dieser radial nach innen vorstehende Abstützzungen 13' zu erkennen. Die Zahl der Abstützzungen 13' ist hier in erfindungsgemäßer Weise auf zwei beschränkt. Der Federteller 11' insgesamt und insbesondere die Abstützzungen 13' sind symmetrisch zu einer Schnittebene A-A durch die Mittelachse Z des Federtellers 11'. Die inneren Enden 14' der Abstützzungen 13' liegen in der hier dargestellten Stellung des Federtellers 11' in der Schnittebene A-A spannungsfrei oder sich mit Druckvorspannung abstützend berührend aneinander an. Die vorderen Enden 14' der Abstützzungen 13' weisen Ausnehmungen 15' auf, die eine Einstecköffnung 16' bilden. Mit den Ausnehmungen 15' können sich die Abstützzungen 13' in einer Ringnut eines Ventilschafts eines Gaswechselventils eines Verbrennungsmotors unter Eingriff in die Ringnut axial abstützen. Die Form der Ausnehmungen 15' kann sich gemeinsam zu einem Kreis ergänzen oder ein Oval bilden, dessen größere Achse sich in Richtung der Schnittebene A-A erstreckt. Grundsätzlich kann die von den Ausnehmungen 15' gebildete Einstecköffnung 16' auch in Draufsicht als Vieleck ausgebildet sein, das die zuvor beschriebenen Kurven (Kreis oder Oval) einbeschreibt. Die Abstützzungen 13' sind so ausgestaltet, daß sich zwischen den Abstützzungen 13' und der Ringscheibe 12' zwei sich gegenüberliegende sichelförmige Ausbrechungen 17' bilden. Mit einer Kreislinie ist die Auflage- bzw. Abstützlinie 18 für eine Ventilfeder an der Ringscheibe 12' gekennzeichnet. Der Durchmesser ∅18 der Auflagelinie 18 entspricht damit dem mittleren Windungsdurchmesser einer zugeordneten schraubenförmigen Ventilfeder. Die bestimmungsgemäße Lage der Ventilfeder ist unterhalb des Federtellers in der Darstellung der Draufsicht nach Figur 6b anzunehmen. Sichtbar ist somit die Oberseite des Federtellers, der sich mit seiner Unterseite auf die Ventilfeder auflegt, die nicht dargestellt ist. Die Abstützzungen 13' sind im Bereich der inneren Enden 14' zu einer mittig geteilten Abstützhülse 19' verformt, die zwischen den Abstützzungen 13' zwei Schlitze 24' von keilförmiger Form bildet. Das im wesentlichen konstante Wanddicke aufweisende Material des gesamten Federtellers 11 ist im Bereich der Stützhülse 19' reduziert. Die Einstecköffnung 16' ist aus einem inneren Zylinderabschnitt 20' mit einem Durchmesser ∅20 und einem inneren Konusabschnitt 21' mit einem Öffnungswinkel α21' ausgebildet. Der Öffnungswinkel α21' kann bevorzugt in der Größenordnung von 40-60°, insbesondere bei 50° liegen. Die Wandstärke der Abstützhülse 19' ist insbesondere zum freien Ende der Abstützhülse 19' hin abnehmend, wobei eine äußere Konusfläche 22 einen Öffnungswinkel a22 bildet, der bevorzugt in der Größenordnung von 20-30°, insbesondere bei 26° liegen kann. Im Schnitt B-B ist erkennbar, daß die Federtellerhälften im Schnitt durch die Abstützzungen 13' jeweils S-förmig geschwungen sind und annähernd tangential in die Abstützhülse 19' übergehen. Mit einer Stirnfläche 25, insbesondere mit einer inneren Abstützkante 23' am freien Ende der Abstützhülse 19', stützt sich der Federteller 11' in einer Ringnut am Ventilschaft bei Belastung durch die Ventilfeder ab. Geraden durch die Auflagelinie 18' auf der Federtellerunterseite und durch die Abstützkante 23', die ebenfalls eingezeichnet sind, spannen einen stumpfen Öffnungswinkel α23' auf, der sich zur Ventilfederseite öffnet. Dies bedeutet in anderer Umschreibung, daß ein axialer Abstand zwischen der Auflagelinie 18' auf der Federtellerunterseite und der Abstützkante 23, die einen kleineren Durchmesser als die Auflagelinie 18' hat, vorhanden ist. Hiermit wird bewirkt, daß bei Belastung des Federtellers 11' durch die Ventilfeder einerseits, die auf die Ringscheibe 12 einwirkt, und durch den Ventilschaft andererseits, der mittels einer Ringnut auf die Abstützzungen 13' einwirkt, eine infinitesimale Verformung der Abstützzungen 13' bewirkt wird, die tendenziell die keilförmige Form der Schlitze 24' erweitert, so daß sich die Abstützhülse 19' mit erhöhter axialer Vorspannung axial an der Ringflanke 34 der Ringnut 33 im Ventilschaft anlegt. Die effektiven Biegebewegungen der Abstützzungen 13' sind hierbei äußerst gering, da die Abstützzungen 13' nach der Montage bereits spielfrei, insbesondere mit radialer Vorspannung aneinander anliegen, wobei die Abstützhülse 19' mit radialem Spiel in der Ringnut des Ventilschafts einsitzt.

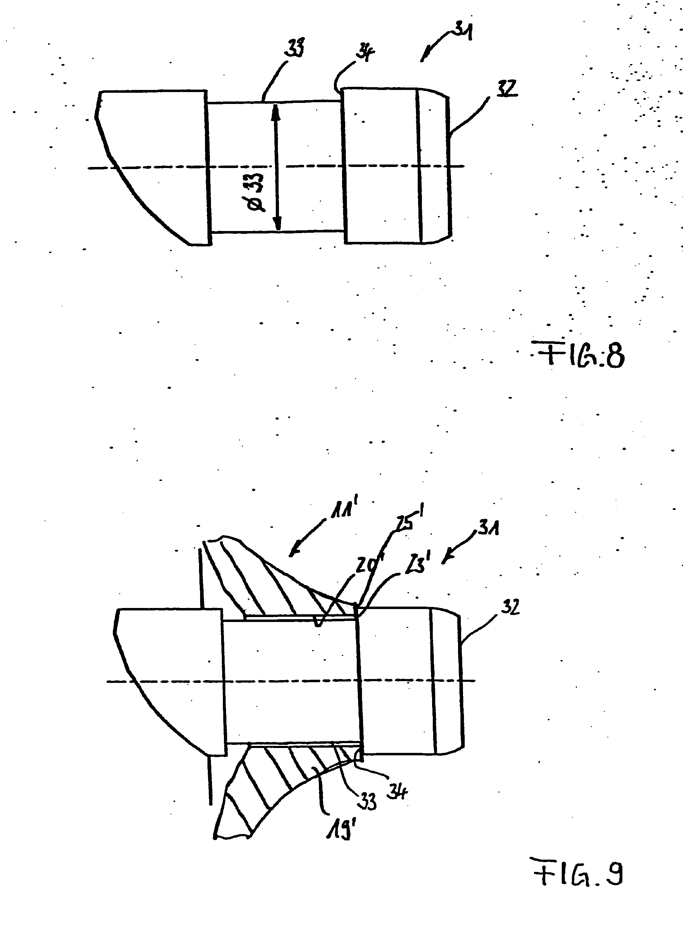

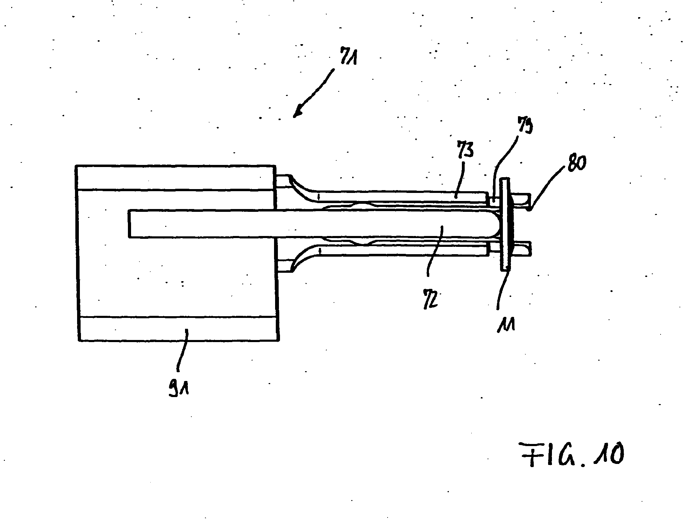

Die Figuren 8 und 9 werden nachstehend gemeinsam beschrieben. Es ist der abgebrochen dargestellte Ventilschaft 31' eines Gaswechselventils gezeigt, in dem mit geringem Abstand von einer Druckfläche 32' für einen Nocken oder dergleichen eine Ringnut 33' in Rechteckform ausgebildet ist, deren Nutgrund den Durchmesser 033' hat. Dieser Durchmesser ∅33' ist kleiner als der Durchmesser ∅20' des Zylinderabschnitts 20' der Abstützhülse 19' des Federtellers 11' im entspannten Zustand. In Figur 9 ist der Federteller 11' in der Ringnut 33' montiert, wobei er sich mit der Abstützkante 23' bzw. seiner Stirnfläche 25' an einer Ringflanke 34' der Ringnut 33' abstützt, während die Abstützhülse 19' radiales Spiel gegenüber dem Nutgrund der Ringnut 33' hat, so daß der Federteller 11' mit der nicht gezeigten Ventilfeder relativ zum Ventilschaft 31 des Gaswechselventils frei drehbar ist.

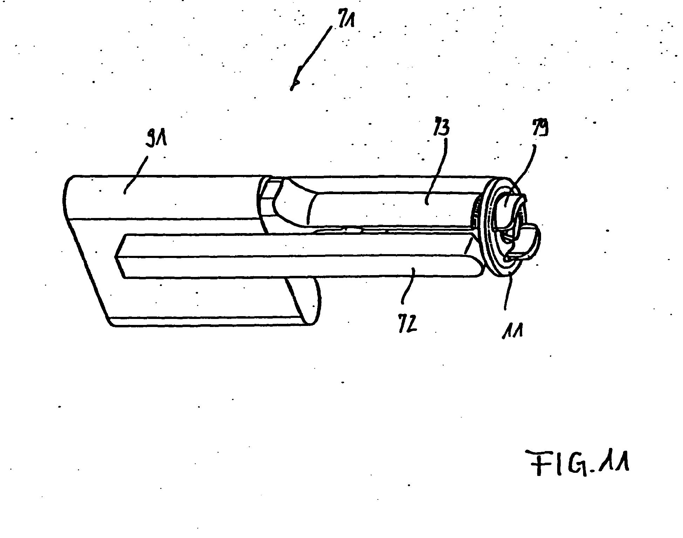

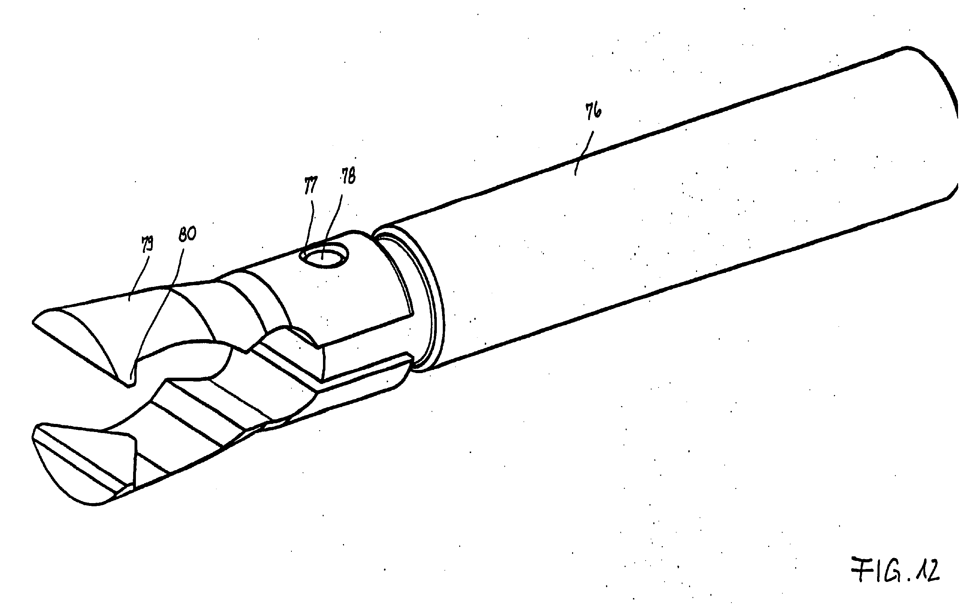

Die Figuren 10 und 11 werden nachstehend gemeinsam beschrieben. Eine erfindungsgemäße Montagevorrichtung 71 umfaßt ein Gehäuse 91 mit zwei außenliegenden Stützzungen 72. Um 90° gegenüber den Stützzungen 72 versetzt sind zwei sich gegenüberliegende Führungsbacken 73 angeordnet. Im Gehäuse 91 ist ein Zugbolzen axial verschiebbar eingesetzt, an dem zwei Klauen 79 gelenkig angelenkt sind. In einer ersten Stellung ist der Zugbolzen im Gehäuse nach rechts verschoben, wobei die Klauen 79 entspannt und nach außen geschwenkt sind. Hierbei können die Klauen 79 mit Haken 80 durch die Ausbrechungen 17 eines auf den Stützzungen aufgelegten erfindungsgemäßen Federtellers 11 hindurchgeführt werden. Wird ausgehend von dieser Stellung der Zugbolzen im Gehäuse 91 nach links verschoben, so wird bewirkt, daß die Klauen 79 nach innen einschwenken. Hierbei kommen die Haken 80 in radiale Überdeckung mit den seitlichen Rändern der Abstützzungen 13, so daß diese unter Erweiterung der Einstecköffnung 16 aufgebogen werden. Diese Verformung erfolgt so weit, daß der Ventilschaft eines Gaswechselventils mit seinem vollen Durchmesser durch die Einstecköffnung 16 hindurchgeschoben werden kann, bis die Ringnut im Ventilschaft die axiale Position der Abstützzungen 13 erreicht und durch Vorschieben des Zugbolzens ermöglicht wird, daß die Abstützzungen 13 mit ihren inneren Enden 14 in die Ringnut am Ventilschaft eingreifen. In der entspannten Stellung der Klauen 79 kann dann die Vorrichtung 71 von der Anordnung aus Ventilschaft und Federteller wieder abgezogen werden. Zum Erzeugen der Zugkräfte auf den Zugbolzen können jegliche Axialkrafterzeuger geeigneter Ausführung Verwendung finden. Diese können hydraulisch oder pneumatisch betätigt sein oder auch elektromagnetisch oder elektromotorisch.

In Figur 12 ist ein Zugbolzen 76 mit zwei gelenkig angelenkten Klauen 79 als Baugruppe gezeigt. Die gelenkige Anlenkung erfolgt über Lageraugen 77 in den Klauen 79, die auf einem Zapfen 78 aufsitzen, der quer durch den Zugbolzen gesteckt ist. Die Klauen 79 haben nach innen gerichtete Haken 80 und sind mit ihrer Außenseite von den Führungsbacken geführt. In vorgeschobener Stellung des Zugbolzens 76 können sie mit ihren freien Enden nach radial außen schwenken. Um die Schwenkbewegungen der Klauen 79 zu bewirken, können Außenkonusabschnitte an den Klauen mit Innenkonusabschnitten in den Führungsbacken zusammenwirken.

### Bezugszeichenliste

- 11: Federteller
- 12: Ringscheibe
- 13: Abstützzunge
- 14: inneres Ende
- 15: Ausnehmung
- 16: Einstecköffnung
- 17: Ausbrechung
- 18: Auflagelinie
- 19: Abstützhülse
- 20: Zylinderabschnitt
- 21: Konusabschnitt
- 22: Konusfläche
- 23: Abstützkante
- 24: Schlitz
- 25: Stirnfläche
- 31: Ventilschaft
- 32: Wirkfläche
- 33: Ringnut
- 34: Ringflanke

- 51: Vorrichtung
- 52: Stützhülse
- 53: Innenkonus
- 54: Innenkonus
- 55: erstes Hülsenende
- 56: Zughülse
- 57: Außenkonus
- 58: Trogausnehmung
- 59: Klaue
- 60: Haken
- 61: Außengewinde
- 62: Mutter
- 63: zweites Hülsenende

- 71: Vorrichtung
- 72: Stützzunge
- 73: Führungsbacke

- 76: Zugbolzen
- 77: Auge
- 78: Zapfen
- 79: Klaue
- 80: Haken

- 91: Gehäuse

## Patentansprüche

1. Federteller (11) für eine Ventilfeder einer Brennkraftmaschine, der unmittelbar mit dem Ventilschaft (31) eines Gaswechselventils unter Eingriff in eine Ringnut (33) im Ventilschaft (31) verbindbar ist,
mit einer Ringscheibe (12) zur Auflage auf der Ventilfeder und zwei von dieser Ringscheibe (12) aus nach radial innen gerichteten Abstützzungen (13), deren innere Enden (14) in Aufsicht auf den Federteller (11) Ausnehmungen (15) zum Eingriff in die Ringnut (33) haben.

2. Federteller nach Anspruch 1,
**dadurch gekennzeichnet,**
**daß** die Abstützzungen (13) so gestaltet sind, daß bei axialer Abstützung der Ringscheibe (12) von der Ventilfederseite her und axialer Belastung der Abstützzungen (13) in Richtung zur Ventilfederseite hin der Abstand zwischen den inneren Enden (14) der sich gegenüberliegenden Abstützzungen (13) vermindert wird.

3. Federteller nach Anspruch 2,
**dadurch gekennzeichnet,**
**daß** bei entspanntem Federteller (11) zwischen den inneren Enden (14) der Abstützzungen (13) in Aufsicht auf den Federteller ein Abstand d vorgesehen ist (Figuren 1 - 4).

4. Federteller nach Anspruch 1,
**dadurch gekennzeichnet,**
**daß** die Abstützzungen (13) so gestaltet sind, daß bei axialer Abstützung der Ringscheibe (12) von der Ventilfederseite her und axialer Belastung der Abstützzungen (13) in Richtung zur Ventilfederseite hin der Abstand zwischen den inneren Enden (14) der sich gegenüberliegenden Abstützzungen (13) unverändert bleibt.

5. Federteller nach Anspruch 4,
**dadurch gekennzeichnet,**
**daß** bei demontiertem Federteller (11) die inneren Enden (14) der Abstützzungen (13) spannungsfrei oder unter Vorspannung sich berührend aneinanderliegen (Figuren 6-9).

6. Federteller nach einem der Ansprüche 1 bis 5,
**dadurch gekennzeichnet,**
**daß** die inneren Enden (14) der Abstützzungen (13) zu einer von Schlitzen (24) geteilten Abstützhülse (19) ausgeformt sind.

7. Federteller nach einem der Ansprüche 1 bis 6,
**dadurch gekennzeichnet,**
**daß** innere Abstützkanten (23) der Abstützzungen (13) gegenüber einer Auflagelinie (18) für die Ventilfeder an der Ringscheibe (12) axial in Richtung zum Ende des Ventilschafts beabstandet sind.

8. Federteller nach einem der Ansprüche 1 bis 7,
**dadurch gekennzeichnet,**
**daß** Geraden durch die inneren Abstützkanten (23) der Abstützzungen (13) und die Auflagelinie (18) für die Ventilfeder an der Ringscheibe (12) einen stumpfen Winkel einschließen, der sich in Richtung zur Ventilfeder öffnet.

9. Federteller nach einem der Ansprüche 1 bis 8,
**dadurch gekennzeichnet,**
**daß** im Axialschnitt (B-B) durch den Federteller (11) mittig durch die Abstützzungen (13) jeweils eine Ringscheibenhälfte (12) mit jeweils einer Abstützzunge (13) S-förmig oder Z-förmig verläuft.

10. Federteller nach einem der Ansprüche 1 bis 9,
**dadurch gekennzeichnet,**
**daß** in Aufsicht auf den Federteller (11) zwischen den Abstützzungen (13) und der Ringscheibe (12) zwei sich gegenüberliegende sichelförmige Ausbrechungen (17) seitlich zu den Abstützzungen (13) gebildet werden.

11. Federteller nach einem der Ansprüche 1 bis 10,
**dadurch gekennzeichnet,**
**daß** die Ausnehmungen (15) an den inneren Enden (14) der Abstützzungen (13) sich in Aufsicht auf den Federteller (11) zum Kreis ergänzen.

12. Federteller nach einem der Ansprüche 1 bis 11,
**dadurch gekennzeichnet,**
**daß** die Ausnehmungen (15) an den inneren Enden (14) der Abstützzungen sich in Aufsicht auf den Federteller zu einem Oval ergänzen, dessen kürzeres Innenmaß in Richtung der Abstützzungen (13) verläuft.

13. Anordnung aus einem Gaswechselventil einer Brennkraftmaschine mit einem Ventilschaft (31) mit einer Ringnut (33) und einem Federteller (11) für eine Ventilfeder, der unmittelbar mit dem Ventilschaft (31) unter Eingriff in die Ringnut (33) verbunden ist, wobei der Federteller (11) mit einer Ringscheibe (12) zur Auflage auf der Ventilfeder und zwei von dieser Ringscheibe (12) aus nach radial innen gerichteten Abstützzungen (13), deren innere Enden (14) in Aufsicht auf die Ringscheibe Ausnehmungen (15) zum Eingriff in die Ringnut (33) haben, versehen ist.

14. Anordnung nach Anspruch 13,
**dadurch gekennzeichnet,**
**daß** die Abstützzungen (13) so gestaltet sind, daß bei axialer Abstützung der Ringscheibe (12) durch die Ventilfeder und axialer Belastung der Abstützzungen (13) durch eine Ringflanke (34) in der Ringnut (33) in Richtung zur Ventilfederseite hin der Abstand zwischen den inneren Enden (14) der sich radial gegenüberliegenden Abstützzungen (13) vermindert wird.

15. Anordnung nach Anspruch 14,
**dadurch gekennzeichnet,**
**daß** bei montiertem Federteller (11) zwischen den inneren Enden (14) der Abstützzungen (13) in Aufsicht auf den Federteller ein Abstand d vorgesehen ist und die Ausnehmungen (15) spielfrei, insbesondere mit Vorspannung in die Ringnut (33) eingreiten (Figuren 1-4).

16. Anordnung nach Anspruch 13,
**dadurch gekennzeichnet,**
**daß** die Abstützzungen (13) so gestaltet sind, daß bei axialer Abstützung der Ringscheibe (12) durch die Ventilfeder und axialer Belastung der Abstützzungen (13) durch eine Ringflanke (34) in der Ringnut (33) zur Ventilfederseite hin der Abstand zwischen den inneren Enden (14) der sich gegenüberliegenden Abstützzungen (13) unverändert bleibt.

17. Anordnung nach Anspruch 16,
**dadurch gekennzeichnet,**
**daß** bei montiertem Federteller (11) die inneren Enden (14) der Abstützzungen (13) spannungsfrei oder unter Vorspannung sich berührend aneinanderliegen und die Ausnehmungen (15) mit Radialspiel in die Ringnut (33) eingreifen (Figuren 6-9).

18. Anordnung nach einem der Ansprüche 13 bis 17,
**dadurch gekennzeichnet,**
**daß** die inneren Enden (14) der Abstützzungen (13) zu einer von Schlitzen (24) geteilten Abstützhülse (19) ausgeformt sind.

19. Anordnung nach einem der Ansprüche 13 bis 18,
**dadurch gekennzeichnet,**
**daß** innere Abstützkanten (23) der Abstützzungen (13) gegenüber Auflagelinie (18) für die Ventilfeder an der Ringscheibe (12) axial in Richtung zum Ende des Ventilschafts (31) beabstandet sind.

20. Anordnung nach einem der Ansprüche 13 bis 19,
**dadurch gekennzeichnet,**
**daß** Geraden durch die inneren Abstützkanten (23) der Abstützzungen (13) und die Auflagelinie (18) für die Ventilfeder an der Ringscheibe (12) einen stumpfen Winkel einschließen, der sich in Richtung zur Ventilfeder öffnet.

21. Anordnung nach einem der Ansprüche 13 bis 20,
**dadurch gekennzeichnet,**
**daß** im Axialschnitt (B-B) durch den Federteller (11) mittig durch die Abstützzungen (13) jeweils eine Ringscheibenhälfte (12) mit jeweils einer Abstützzunge (13) S-förmig oder Z-förmig verläuft.

22. Anordnung nach einem der Ansprüche 13 bis 21,
**dadurch gekennzeichnet,**
**daß** die Ringnut (33) als Rechtecknut ausgebildet ist.

23. Anordnung nach einem der Ansprüche 13 bis 22,
**dadurch gekennzeichnet,**
**daß** die Abstützzungen (13) radiale Stirnflächen (25) zur Anlage an einer Ringflanke (34) der Ringnut (33) haben.

24. Vorrichtung zur Montage einer Anordnung nach einem der Ansprüche 13 bis 23,
mit Abstützmitteln (52, 72), auf die sich der Federteller (11) mit der Oberseite der Ringscheibe (12) auflegen kann, mit innerhalb der Abstützmittel (52, 72) liegenden Zugmitteln (56, 76), die gegenüber den Abstützmitteln (52, 72) axial verstellbar sind, und mit einem Paar Zugklauen (59, 79), die von den Zugmitteln (56, 76) betätigbar sind und relativ zu den Abstützmitteln (52, 72) und den Zugmitteln (56, 76) radial beweglich sind, wobei die Zugklauen (59, 79) in einer radial nach außen geschwenkten Stellung durch die sichelförmigen Ausbrechungen (17) des Federtellers (11) hindurchführbar sind und in einer radial nach innen geschwenkten Stellung die Abstützzungen (13) von der Ventilfederseite hintergreifen.

25. Vorrichtung nach Anspruch 24,
mit einer außenliegenden Stützhülse (52) an deren erstem Hülsenende (54) sich der Federteller (11) mit der Oberseite der Ringscheibe (12) auflegen kann, einer innenliegenden Zughülse (56), die in die Stützhülse (52) einziehbar ist und zwei radial ausbiegbare Zugklauen (59) umfaßt, die in aus der Stützhülse (52) ausgefahrener Stellung radial nach außen ausbiegen und durch die sichelförmigen Ausbrechungen (17) des Federtellers (11) hindurchführbar sind und sich beim Zurückziehen der Zughülse (56) in die Stützhülse (52) nach innen einschwenkend auf die Unterseite der Abstützzungen (13) auflegen und diese unter Erweiterung der Einstecköffnung (16) ausbiegen, so daß der Ventilschaft (31) von der Ventilfederseite in den Federteller (11) einführbar ist.

26. Vorrichtung nach Anspruch 25,
**dadurch gekennzeichnet,**
**daß** die Zughülse (56) ein Außengewinde (61) hat, auf das eine Mutter (62) aufgedreht ist, die sich an der Stützhülse (52) axial entgegengesetzt zum ersten Hülsenende (54) am zweiten Hülsenende (63) abstützt.

27. Vorrichtung nach Anspruch 25,
**dadurch gekennzeichnet,**
**daß** die Zughülse (56) gegenüber der Stützhülse (52) abgestützte Axialverstellmittel aufweist, die insbesondere hydraulisch, pneumatisch, elektrisch oder elektromagnetisch verstellbar sind.

28. Vorrichtung nach Anspruch 24,
mit außenliegenden Stützzungen (72) auf deren Enden sich der Federteller (11) mit der Oberseite der Ringscheibe (12) auflegen kann, einem innenliegenden Zugbolzen (76), der zwischen die Stützzungen (72) einziehbar ist und zwei radial ausschwenkbare Zugklauen (79) trägt, die in aus den Stützzungen (72) ausgefahrener Stellung radial ausschwenkbar sind und durch die sichelförmigen Ausbrechungen (17) des Federtellers hindurchführbar sind, und die sich beim Zurückziehen des Zugbolzens (76) zwischen die Stützzungen (72) nach innen einschwenkend auf die Unterseite der Abstützzungen (13) auflegen und diese unter Erweiterung der Einstecköffnung (16) ausbiegen, so daß der Ventilschaft (31) von der Ventilfederseite in den Federteller (11) einführbar ist.

29. Vorrichtung nach Anspruch 27,
**dadurch gekennzeichnet,**
**daß** die Zugklauen (79) zwischen zwei Führungsbacken (73) geführt sind, die über Kreuz mit den Stützzungen (72) angeordnet sind.

30. Vorrichtung nach einem der Ansprüche 28 oder 29,
**dadurch gekennzeichnet,**
**daß** der Zugbolzen (76) gegenüber den Stützzungen (72) mittelbar abgestützte Axialverstellmittel aufweist, die insbesondere hydraulisch, pneumatisch, elektrisch oder elektromagnetisch verstellbar sind.
